(19) Europäisches Patentamt
European Patent Office
Office européen des brevets

(11) Veröffentlichungsnummer: **0 371 332 B1**

(12) **EUROPÄISCHE PATENTSCHRIFT**

(45) Veröffentlichungstag der Patentschrift: **27.10.93**

(51) Int. Cl.$^5$: **C09B 62/26**, D06P 1/382

(21) Anmeldenummer: **89121179.9**

(22) Anmeldetag: **16.11.89**

Die Akte enthält technische Angaben, die nach dem Eingang der Anmeldung eingereicht wurden und die nicht in dieser Patentschrift enthalten sind.

(54) **Reaktivfarbstoffe.**

(30) Priorität: **29.11.88 DE 3840164**

(43) Veröffentlichungstag der Anmeldung:
**06.06.90 Patentblatt 90/23**

(45) Bekanntmachung des Hinweises auf die Patenterteilung:
**27.10.93 Patentblatt 93/43**

(84) Benannte Vertragsstaaten:
**CH DE FR GB LI**

(56) Entgegenhaltungen:
**DE-A- 3 403 662**
**FR-A- 1 570 565**
**US-A- 4 007 164**

(73) Patentinhaber: **BAYER AG**

**D-51368 Leverkusen(DE)**

(72) Erfinder: **Schündehütte, Karl Heinz, Prof. Dr.**
**Klief 75**
**D-5090 Leverkusen 3(DE)**
Erfinder: **Groll, Manfred, Dr.**
**Paul-Klee-Strasse 68c**
**D-5090 Leverkusen 1(DE)**
Erfinder: **Stawitz, Josef Walter, Dr.**
**Am Hagen 1**
**D-5068 Odenthal(DE)**

**EP 0 371 332 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind Reaktivfarbstoffe der Formel

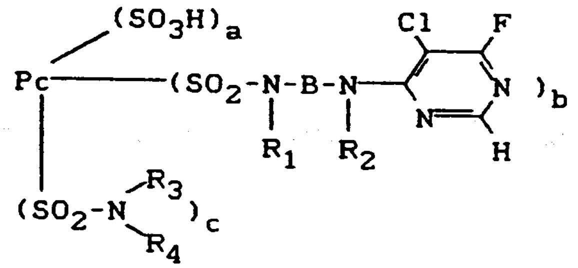

(I)

worin

| | |
|---|---|
| Pc = | Rest eines Cu- oder Ni-Phthalocyanins |
| $R_1$, $R_2$ = | H, gegebenenfalls substituiertes $C_1$-$C_4$-Alkyl oder zusammen gegebenenfalls substituiertes $C_2$-Alkylen, |
| B = | gegebenenfalls substituiertes Phenylen, |
| $R_3$, $R_4$ = | H, gegebenenfalls substituierter aliphatischer oder aromatischer Rest |
| a = | 1,0 bis 2,7, vorzugsweise 1,8 bis 2,7, |
| b = | 0,8 bis 1,2, |
| c = | 0,5 bis 1,5, vorzugsweise 0,5 bis 1,0, wobei a + b + c = 3 bis 4. |

Die Reste $R_1$, $R_2$ sowie $R_3$, $R_4$ besitzen unabhängig voneinander die angegebene Bedeutung.

Jede der Sulfo- bzw. Sulfonamidgruppen ist an einen verschiedenen Benzolring des Phthalocyanins in 3- oder 4-Stellung gebunden.

Aus Beispiel 7 der US-A- 4007 164 ist bereits ein faser reaktiver Cu - Phthalocyanin farbstoff bekannt, der aber hinsichtlich des Färbeverhaltens nicht befriedigt. In der DE-A-3403 662 werden Cu - Phthalocyanin farbstoffe mit einem Difluorchlorpyrimidin als Reaktivrest beschrieben.

Geeignete Reste $R_1$ und $R_2$ sind neben H beispielsweise auch gegebenenfalls durch OH, COOH, $OSO_3H$ oder $SO_3H$ substituiertes $C_1$-$C_4$-Alkyl wie Methyl, Ethyl, Propyl, $\beta$-Hydroxyethyl, $\gamma$-Hydroxypropyl, $\beta$-Carboxyethyl, $\beta$-Sulfoethyl.

Als substituenten für das Phenylen-Brückenglied B kommen beispielsweise in Frage: $C_1$-$C_4$-Alkyl, $C_1$-$C_4$-Alkoxy, Halogen, insbesondere Cl, Nitro, Cyan, COOH, $SO_3H$, Carbonamid, Sulfonamid, Acylamino, insbesondere $C_1$-$C_4$-Alkylcarbonylamino oder $-NHCONH_2$.

Beispielhaft seien folgende Reste B genannt:

1,2-Phenylen, 1,3-Phenylen, 1,4-Phenylen, 3-Methyl-1,4-phenylen, 2-Methyl-1,4-phenylen, 2-Methyl-5-chlor-1,4-phenylon, 4-Methoxy-1,3-phenylen, 3-Methoxy-1,4-phenylon, 4-Chlor-1,3-phenylen, 2-Chlor-1,4-phenylen, 5-Carbonamido-1,3-phenylen, 1,4-Phenylen-2-sulfonsäure, 1,3-Phenylen-4-sulfonsäure, 1,3-Phenylen-5-carbonsäure, 1,3-Phenylen-4-carbonsäure.

Geeignete Reste $R_3$ und $R_4$ sind neben H insbesondere die für $R_1$ bzw. $R_2$ genannten sowie gegebenenfalls durch Sulfo oder Carboxy substituiertes Phenyl.

Bevorzugte Farbstoffe I sind solche mit

$R_1$ - $R_4$ = H,

| | |
|---|---|
| B = | Phenylen, gegebenenfalls substituiert durch $C_1$-$C_4$-Alkyl, $C_1$-$C_4$-Alkoxy oder Halogen, |
| a = | 1,8 bis 2,7, |
| b = | 0,8 bis 1,2, |
| c = | 0,5 bis 1,1. |

Bevorzugte Farbstoffe I sind weiterhin solche mit

| | |
|---|---|
| $R_1$ - $R_4$ = | H, |
| B = | Sulfo- oder Carboxyphenylen, gegebenenfalls weiter substituiert durch $C_1$-$C_4$-Alkyl, $C_1$-$C_4$-Alkoxy, oder Cl, |
| a = | 1,8 bis 2,7, |
| b = | 0,8 bis 1,2, |
| c = | 0,5 bis 1,1. |

Weiterhin bevorzugte Farbstoffe I sind solche mit

$R_1$ - $R_4$ = H,
B = Phenylen, gegebenenfalls substituiert durch $C_1$-$C_4$-Alkyl, $C_1$-$C_4$-Alkoxy, oder Cl vorzugsweise Phenylen,
a = 1,8 bis 2,7,
b = 0,8 bis 1,0,
c = 0,5 bis 1,0.

Bevorzugt sind weiterhin Farbstoffe I mit

$R_1$ - $R_3$ = H
$R_4$ = eine wasserlöslichmachende Gruppe (vorzugsweise $SO_3H$, COOH, OH) enthaltender aliphatischer oder aromatischer Rest
B = Phenylen, gegebenenfalls substituiert durch $SO_3H$, COOH, $C_1$-$C_4$-Alkyl, $C_1$-$C_4$-Alkoxy, oder Halogen.

Die angegebenen Formeln sind die der freien Säuren. Im allgemeinen werden die bei der üblichen Herstellung anfallenden Salze, insbesondere die Alkali- oder Ammoniumsalze eingesetzt.

Die Herstellung der Farbstoffe I erfolgt beispielsweise dadurch, daß man ein Phthalocyanin-sulfonsäurechlorid der Formel

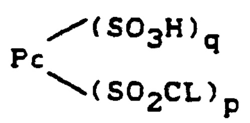

(II)

worin

Pc = Rest eines Cu- oder Ni-Phthalocyanins,
q = 0,6 bis 2,0 und
p = 1,5 bis 3,4

mit 0,8 bis 1,2 Mol eines Amins der Formel

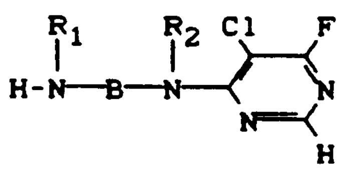

(III)

und 0,5 bis 1,5 Mol eines Amins der Formel

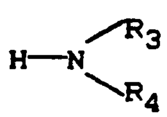

(IV),

wobei
B, $R_1$, $R_2$, $R_3$ und $R_4$ die für Formel (I) angegebene Bedeutung haben, umsetzt
und anschließend gegebenenfalls noch vorhandene Sulfonsäurechlorid-Gruppen verseift.

Amine der Formel (III) lassen sich leicht durch halbseitigen Umsatz des entsprechenden Diamins mit 4,6-Difluor-5-chlor-pyrimidin der Formel

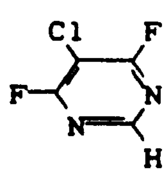

(V)

bei 20 bis 35 °C in wäßriger Suspension herstellen.

Ein anderer Weg zur Herstellung der vorgenannten Farbstoffe besteht darin, daß man das Phthalocyanin-sulfonsäurechlorid der Formel (II) zunächst mit 0,8 bis 1,2 Mol eines Amins der Formel

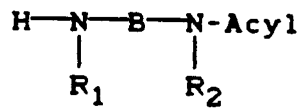

(VI)

bzw.

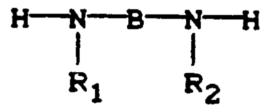

(VII)

und 0,5 bis 1,5 Mol eines Amins der Formel

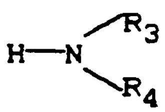

(IV)

wobei

B, $R_1$, $R_2$, $R_3$ und $R_4$ die für Formel (I) angegebene Bedeutung haben,

umsetzt, gegebenenfalls die Acylamino-Gruppe verseift und die erhaltene Farbbase mit 0,8 bis 1,2 Mol 4,6-Difluor-5-chlor-pyrimidin der Formel

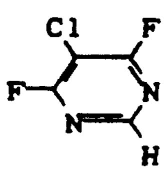

(V)

umsetzt.

Die Herstellung der Phthalocyanin-sulfonsäurechloride der Formel (II) erfolgt durch Behandeln von Cu-Phthalocyanin oder Ni-Phthalocyanin in Chlorsulfonsäure bei 135 bis 140 °C.

Als Amine der Formel (III) seien beispielsweise genannt:

4-(3-Aminophenyl)amino-5-chlor-6-fluor-pyrimidin,
4-(4-Aminophenyl)amino-5-chlor-6-fluor-pyrimidin,
4-(3-Aminophenyl)amino-5-chlor-6-fluor-pyrimidin,
4-(4-Methylaminophenyl)amino-5-chlor-6-fluor-pyrimidin,
4-(3-Amino-4-methylphenyl)amino-5-chlor-6-fluor-pyrimidin,
4-(4-Amino-3-chlorphenyl)amino-5-chlor-6-fluor-pyrimidin,
4-(3-Amino-phenyl-4-sulfonsäure)amino-5-chlor-6-fluor-pyrimidin,
4-(3-Amino-4-carboxyphenyl)amino-5-chlor-6-fluor-pyrimidin,
4-(4-Aminophenyl)methylamino-5-chlor-6-fluor-pyrimidin,

Als Beispiele für Amine der Formel (IV) seien genannt: Ammoniak, Methylamin, Ethylamin, Hydroxyethylamin, Aminoessigsäure, Amino-ethansulfonsäure, Methylaminoethansulfonsäure, Amino-methansulfonsäure, Ethanolaminoschwefelsäure-ester.

Als Beispiele für Amine der Formel (VI) seien genannt:
4-Amino-formanilid, 3-Amino-formanilid, 2-Amino-acetanilid, 3-Amino-acetanilid, 4-Amino-acetanilid, 3-Aminophenyl-oxamidsäure, 4-Aminophenyl-oxamidsäure, N-(3-Aminophenyl)-2-hydroxy-acetamid, N-(4-Aminophenyl)-N-methyl-acetamid, N-(4-Aminophenyl)-N-methylformamid, N-(4-Aminophenyl)-N-ethylacetamid, N-(4-Amino-2,5-dichlorphenyl)-acetamid, N-(4-Amino-3-nitrophenyl)-acetamid, N-(5-Amino-2-methylphenyl)-formamid, N-(5-Amino-2-methylphenyl)-acetamid, N-(3-Amino-2-methylphenyl)-acetamid, N-(3-Amino-4-methylphenyl)-N-ethylacetamid, N-(4-Amino-3-methylphenyl)-acetamid, N-(2-Amino-4-methylphenyl)-acetamid, 4-(Acetylamino)-2-aminobenzoesäure, 5-(Acetylamino)-2-aminobenzoesäure.

Als Beispiele für Amine der Formel (VII) seien genannt:
1,3-Diaminobenzol-4-sulfonsäure, 1,4-Diaminobenzol-2-sulfonsäure, 1,3-Diaminobenzol-4-carbonsäure, 1,4-Diaminobenzol-2-carbonsäure, 2-Chlor-phenylendiamin-1,4,2-Nitrophenylendiamin-1,4.

Die Umsetzung der Phthalocyanin-sulfonsäurechloride der Formel (II) mit den Aminen der Formeln (III), (IV), (VI) und (VII) geschieht vorzugsweise in wäßriger Lösung bzw. Suspension bei Temperaturen von 0 bis 30 °C und pH-Werten von 6 bis 10. Die Verseifung der Acylamino-Gruppe nach dem Umsatz von (II) mit (VI) kann sowohl in saurem als auch in alkalischem Medium vorzugsweise bei Temperaturen von 70 bis 80 ° durchgeführt werden.

Der Umsatz der Farbbase mit dem Difluor-chlor-pyrimidin der Formel (V) wird in wäßriger Lösung bei pH 6 bis 7 und 20 ° bis 35 °C durchgeführt.

Setzt man ein Phthalocyanin-sulfonsäurechlorid der Formel (II) mit einem Amin der Formel (III) um, so ist es nicht notwendig von isoliertem Amin (III) auszugehen. Man kann vielmehr die beim halbseitigen Umsatz von Diamin mit 4,6-Difluor-5-chlor-pyrimidin anfallende Suspension von (III) für den Umsatz mit dem Phthalocyanin-sulfonsäurechlorid einsetzen.

Die neuen Farbstoffe eignen sich hervorragend zum Färben und Bedrucken hydroxyl- und amidgruppenhaltiger Textilmaterialien, beispielsweise solchen aus Cellulose, Wolle oder synthetischen Polyamiden. Ihre Anwendung erfolgt nach üblichen Methoden.

In den folgenden Beispielen bedeuten die Teile Gewichtsteile und die Grade Celsiusgrade.

Beispiel 1

59,4 Teile Kupferphthalocyanin 97 %ig werden in 234 Teilen Chlorsulfonsäure 8 Stunden bei 136 bis 138 ° gerührt. Die Schmelze wird auf 25 ° gekühlt und - gegebenenfalls nach Verdünnen mit etwas Chlorsulfonsäure - auf Eis ausgetragen, wobei die Temperatur +3 ° nicht überschreiten soll. Die Suspension wird abgesaugt und mit 1600 Teilen Eiswasser, dem 75 Teile Salzsäure 30 %ig zugesetzt sind, gewaschen.

Das Nutschgut wird mit 1000 Teilen Eiswasser versetzt und 15 Minuten verrührt. Nun rührt man 5,5 Teile Ammonchlorid und 23,75 Teile 4-Fluor-5-chlor-6-(3-aminophenyl)amino-pyrimidin ein. Durch Zugabe von Natronlauge wird der pH-Wert der Suspension bzw. Lösung in 2 Stunden auf 10,0 gestellt, wobei gleichzeitig die Temperatur auf 23 ° erhöht wird. Man rührt bei pH 10 und 20 ° bis 24 ° bis zur Beendigung der Reaktion. Der Farbstoff wird ausgesalzen, kurz bei pH 7 nachgerührt, abgesaugt und mit verdünnter NaCl-Lösung mehrmals gewaschen. Der Farbstoff wird bei 60 ° getrocknet. Er entspricht in Form seiner freien Säure im wesentlichen der Formel

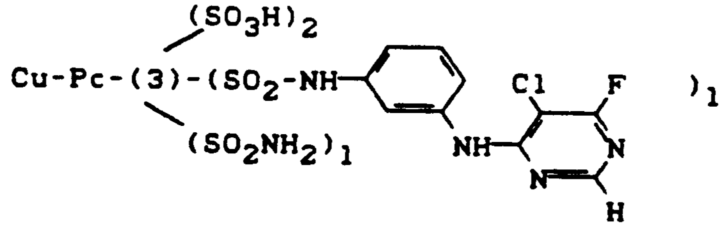

und färbt z.B. nach dem Ausziehverfahren Baumwolle in klaren, äußerst wasch- und lichtechten türkisblauen Tönen, wobei die optimale Färbetemperatur bei 80 ° liegt.

Das in Absatz 2 genannte 4-Fluor-5-chlor-6-(3-aminophenyl)amino-pyrimidin erhält man, wenn man auf eine wäßrige Lösung von 1 Mol Phenylendiamin-1,3 unter gutem Rühren bei 20 ° bis 35 ° und einem pH-Wert von 6 bis 7 1 Mol 4,6-Difluor-5-chlor-pyrimidin einwirken läßt.

Beispiel 2

59,4 Teile Kupferphthalocyanin 97 %ig werden in 190 Teilen Chlorsulfonsäure 8 Stunden bei 136 bis 138° gerührt. Die Schmelze wird auf 25° gekühlt und - gegebenenfalls nach Verdünnen mit etwas Chlorsulfonsäure - auf Eis ausgetragen, wobei die Temperatur +3° nicht überschreiten soll. Die Suspension wird abgesaugt und mit 1600 Teilen Eiswasser, dem 70 Teile Salzsäure 30 %ig zugesetzt sind, gewaschen.

Das Nutschgut wird mit 1000 Teilen Eiswasser versetzt und 15 Minuten verrührt. Nun rührt man 5.5 Teile Ammonchlorid und 20 Teile 4-fluor-5-chlor-6-(3-aminophenyl)amino-pyrimidin ein. Durch Zugabe von Natronlauge wird der pH-Wert der Suspension bzw. Lösung in 90 Minuten auf 9,0 gestellt, wobei die Temperatur gleichzeitig auf 20° erhöht wird. Man rührt 5 Stunden bei pH 9,0 und 20° bis 24° nach, setzt 5 ml Pyridin zu und hält nochmals 2 Stunden bei pH 9. Der Farbstoff wird dann ausgesalzen, die Suspension kurz bei pH 7 nachgerührt, abgesaugt und mehrmals mit verdünnter NaCl-Lösung abgedeckt. Der Farbstoff wird bei 60° im Umluftschrank getrocknet.

Der Farbstoff entspricht in Form seiner freien Säure der Formel

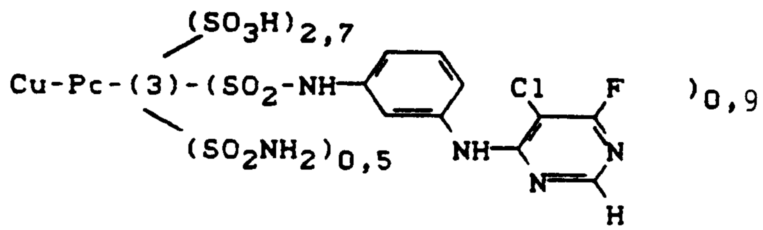

Er besitzt eine sehr gute Löslichkeit und färbt Baumwolle in klaren äußerst wasch- und lichtechten türkisblauen Tönen, wobei die optimale Färbetemperatur bei 80° liegt.

Beispiel 3

59,4 Teile Kupferphthalocyanin 97 %ig werden in 298 Teilen Chlorsulfonsäure 8 Stunden bei 136 bis 138° gerührt. Die Schmelze wird auf 25° gekühlt und - gegebenenfalls nach Verdünnen mit etwas Chlorsulfonsäure - auf Eis ausgetragen, wobei die Temperatur +3° nicht überschreiten soll. Die Suspension wird abgesaugt und mit 1600 Teilen Eiswasser, dem 70 Teile Salzsäure 30 %ig zugesetzt sind, gewaschen.

Das Nutschgut wird mit 1000 Teilen Eiswasser versetzt und 15 Minuten verrührt. Nun rührt man eine wäßrige Lösung, die 14,7 Teile 2-Amino-ethyl-sulfonsaures-Natrium enthält, ein und gibt anschließend 25 Teile 4-Fluor-5-chlor-6-(3-aminophenyl)amino-pyrimidin zu. Mit Hilfe von verdünnter Natronlauge wird der pH-Wert der Suspension bzw. Lösung 120 Minuten auf 9,0 eingestellt, wobei die Temperatur gleichzeitig auf 24° erhöht wird. Man rührt 5 Stunden bei pH 9,0 setzt zur besseren Verseifung restlicher Sulfonsäurechlorid-Gruppen 5 ml Pyridin zu und rührt nochmals 2 Stunden bei pH 9,0. Der erhaltene Farbstoff wird ausgesalzen, kurz bei pH 7,0 nachgerührt, abgesaugt und kurz mit verdünnter NaCl-Lösung gewaschen. Der Farbstoff wird bei 60° im Umluftschrank getrocknet. Der Farbstoff entspricht in Form seiner freien Säure der Formel

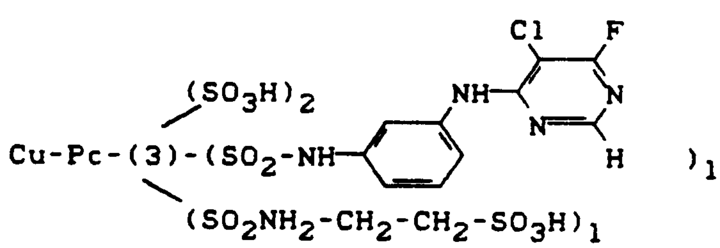

hat eine ausgezeichnete Löslichkeit und färbt Baumwolle in klaren, äußerst wasch- und lichtechten türkisblauen Tönen, wobei die optimale Färbetemperatur bei 80° liegt.

Arbeitet man wie vorstehend beschrieben, ersetzt jedoch die in Absatz 2 genannten 14,7 Teile 2-Amino-ethan-sulfonsaures-Natrium durch 8 Teile Amino-essigsäure oder 14,1 Teile Ethanolamin-schwefelsäureester, so erhält man ebenfalls Farbstoffe, die eine sehr gute Löslichkeit besitzen und Baumwolle in klaren türkisblauen Tönen von sehr guter Wasch- und Lichtechtheit färben.

Beispiel 4

59,4 Teile Kupferphthalocyanin 97 %ig werden in 234 Teilen Chlorsulfonsäure 8 Stunden bei 136 bis 138° gerührt. Die Schmelze wird auf 25° gekühlt und - gegebenenfalls nach Verdünnen mit etwas Chlorsulfonsäure - auf Eis ausgetragen, wobei die Temperatur +3° nicht überschreiten soll. Die Suspension wird abgesaugt und mit 1600 Teilen Eiswasser, dem 75 Teile Salzsäure 30 %ig zugesetzt sind, gewaschen.

Das Nutschgut wird mit 1000 Teilen Eiswasser versetzt und 15 Minuten verrührt. Nun rührt man 5,5 Teile Ammonchlorid und 23,75 Teile 4-Fluor-5-chlor-6-(4-aminophenyl)amino-pyrimidin ein. Durch Zugabe von Natronlauge wird der pH-Wert der Suspension bzw. Lösung in 2 Stunden auf 10,0 gestellt, wobei gleichzeitig die Temperatur auf 23° erhöht wird. Man rührt bei pH 10 und 20 bis 24° bis zur Beendigung der Reaktion. Der Farbstoff wird ausgesalzen, kurz bei pH 7 nachgerührt, abgesaugt und mit verdünnter NaCl-Lösung mehrmals abgedeckt. Der Farbstoff wird bei 60° getrocknet. Er entspricht in Form seiner freien Säure der Formel

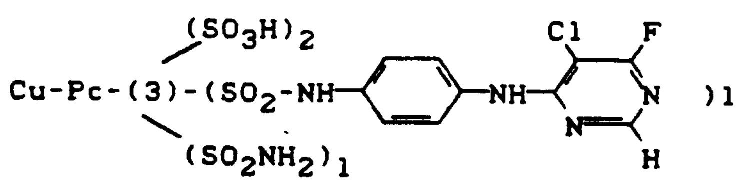

Der Farbstoff färbt Baumwolle in klaren, äußerst wasch-und lichtechten türkisblauen Tönen, wobei die optimale Färbetemperatur bei 80° liegt.

Zu den Farbstoffen mit ähnlichen Eigenschaften gelangt man, wenn man die in Absatz 2 genannten 23,75 Teile 4-Fluor-5-chlor-6-(4-aminophenyl)amino-pyrimidin durch 25,3 Teile 4-Fluor-5-chlor-6-(4-aminophenyl)methylamino-pyrimidin oder durch 25,3 Teile 4-Fluor-5-chlor-6-(3-amino-4-methylphenyl)amino-pyrimidin bzw. durch 27,3 Teile 4-Fluor-5-chlor-6-(3-chlor-4-aminophenyl)amino-pyrimidin ersetzt.

Arbeitet man, wie in Absatz 2 und 3 beschrieben jedoch unter Einsatz von nur 2,7 Teilen Ammonchlorid, so erhält man türkisblaue Farbstoffe die bei ähnlichem Ziehvermögen, aber verbesserter Löslichkeit Baumwolle in türkisblauen Tönen von sehr guter Wasch- und Lichtechtheit färben.

Die in diesem Beispiel genannten Pyrimidin-Derivate werden, wie im letzten Abschnitt von Beispiel 1 beschrieben, aus den entsprechenden Diaminen durch Umsetzung von 4,6-Difluor-5-chlor-pyrimidin hergestellt.

Beispiel 5

59,4 Teile Kupferphthalocyanin 97 %ig werden in 234 Teilen Chlorsulfonsäure 8 Stunden bei 136 bis 138° gerührt. Die Schmelze wird auf 25° gekühlt und - gegebenenfalls nach Verdünnen mit etwas Chlorsulfonsäure - auf Eis ausgetragen, wobei die Temperatur +3° nicht überschreiten soll. Die Suspension wird abgesaugt und mit 1600 Teilen Eiswasser, dem 75 Teile Salzsäure 30 %ig zugesetzt sind, gewaschen.

Das Nutschgut wird mit 300 Teilen Wasser und 200 Teilen Eis versetzt und 15 Minuten bei 0 bis 3° gerührt. Anschließend gibt man 2,7 Teile Ammonchlorid und 29,2 Teile 3-Amino-acetanilid-hydrochlorid (51,6 %ig) zu. Durch Zugabe von Natronlauge stellt man den pH-Wert innerhalb von 2 Stunden auf 10,0, wobei die Temperatur gleichzeitig auf 24° gesteigert wird. Nun rührt man bei 22° bis 25° und pH 9,8 bis 10,0 bis zur Beendigung der Reaktion. Man steigert die Temperatur auf 65 bis 68° und läßt innerhalb von 5 Minuten 276 Teile Natronlauge (30 %ig) zulaufen und rührt zur Verseifung der Acetylamino-Gruppe 6 Stunden bei 72°. Zur Isolierung der Farbbase läßt man in 15 Minuten 380 Teile Salzsäure (30 %ig) zulaufen, rührt kurz bei 60° nach, saugt ab und wäscht mehrmals mit einer Mischung von 270 Teilen Wasser und 35 Teilen Salzsäure (30 %ig).

Das Nutschgut aus Absatz 2 wird mit Hilfe von Natronlauge in 1500 Teilen Wasser bei pH 7,0 bis 7,5 gelöst. Unter gutem Rühren gibt man bei pH 6,5 bis 7,0 in 5 Minuten 16,5 Teile 4,6-Difluor-5-chlor-pyrimidin zu. Man steigert die Temperatur allmählich auf 40°, wobei man durch Zugabe von Natronlauge einen pH-Wert von 6,5 bis 7,0 aufrecht erhält. Nach beendetem Umsatz wird der Farbstoff ausgesalzen, abgesaugt, kurz mit verdünnter Kochsalz-Lösung gewaschen und bei 60° getrocknet. Der Farbstoff entspricht in Form seiner freien Sulfonsäure der Formel

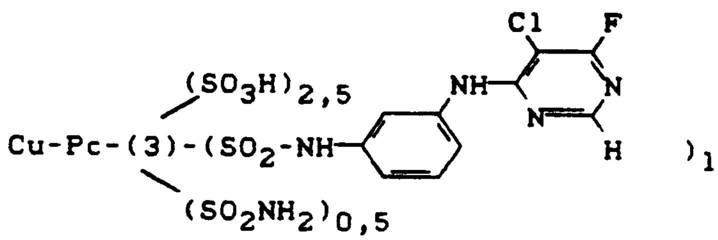

Er färbt Baumwolle in klaren äußerst wasch- und lichtechten türkisblauen Tönen, wobei die optimale Färbetemperatur bei 80° liegt.

Beispiel 6

59,4 Teile Kupferphthalocyanin 97 %ig werden in 298 Teilen Chlorsulfonsäure 8 Stunden bei 136 bis 138° gerührt. Die Schmelze wird auf 25° gekühlt und - gegebenenfalls nach Verdünnen mit etwas Chlorsulfonsäure - auf Eis ausgetragen, wobei die Temperatur +3° nicht überschreiten soll. Die Suspension wird abgesaugt und mit 1600 Teilen Eiswasser, dem 70 Teile Salzsäure 30 %ig zugesetzt sind, gewaschen.

Das Nutschgut wird mit 300 Teilen Wasser und 200 Teilen Eis versetzt und 15 Minuten bei 0° bis 3° gerührt. Anschließend gibt man 5,4 Teile Ammonchlorid und 15 g 3-Amino-acetanilid-hydrochlorid (100 %ig) zu. Durch Zugabe von Natronlauge stellt man den pH-Wert innerhalb von 2 Stunden auf 10,0, wobei die Temperatur gleichzeitig auf 24° gesteigert wird. Nun rührt man bei 22° bis 24° und pH 9,8 bis 10,0 bis zur Beendigung der Reaktion. Man steigert die Temperatur auf 65° bis 68° und läßt innerhalb von 5 Minuten 276 Teile Natronlauge (30 %ig) zulaufen und rührt zur Verseifung der Acetylamino-Gruppe 6 Stunden bei 72°. Zur Isolierung der Farbbase läßt man in 15 Minuten 380 Teile Salzsäure (30 %ig) zulaufen, rührt kurz bei 60° nach, saugt ab und wäscht mehrmals mit einer Mischung von 270 Teilen Wasser und 35 Teilen Salzsäure (30 %ig).

Das Nutschgut aus Absatz 2 wird mit Hilfe von Natronlauge in 1500 Teilen Wasser bei pH 7,0 bis 7,5 gelöst. Unter gutem Rühren gibt man bei pH 6,5 bis 7,0 in 5 Minuten 16,5 Teile 4,6-Difluor-5-chlor-pyrimidin zu. Man steigert die Temperatur allmählich auf 40°, wobei man durch Zugabe von Natronlauge einen pH-Wert von 6,5 bis 7,0 aufrecht erhält. Nach beendetem Umsatz wird der Farbstoff ausgesalzen, abgesaugt, kurz mit verdünnter Kochsalz-Lösung gewaschen und bei 60° getrocknet. Der Farbstoff entspricht in Form seiner freien Sulfonsäure der Formel

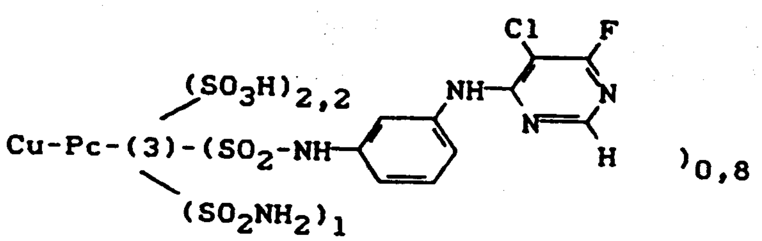

Der Farbstoff hat eine gute bis sehr gute Löslichkeit und färbt Baumwolle in wasch- und lichtechten türkisblauen Tönen, wobei die optimale Färbetemperatur bei 80° liegt.

Beispiel 7

57,5 Teile Nickel-Phthalocyanin 99 %ig werden in 257 Teilen Chlorsulfonsäure 8 Stunden bei 136 bis 138° gerührt. Die Schmelze wird auf 25° gekühlt und - gegebenenfalls nach Verdünnen mit etwas Chlorsulfonsäure - auf Eis ausgetragen, wobei die Temperatur +3° nicht überschritten werden soll. Die Suspension wird abgesaugt und mit 1600 Teilen Eiswasser, dem 150 Teile Salzsäure 30 %ig zugesetzt sind, gewaschen.

Das Nutschgut wird mit 1000 Teilen Eiswasser versetzt und 15 Minuten verrührt. Nun rührt man 2,7 Teile Ammonchlorid und 22 Teile 4-Fluor-5-chlor-6-(3-amino-phenyl)amino-pyrimidin ein. Durch Zugabe von Natronlauge wird der pH-Wert der Suspension bzw. Lösung in 2 Stunden auf 10,0 gestellt, wobei gleichzeitig die Temperatur auf 23° erhöht wird. Man rührt bei pH 10 und 20 bis 24° bis zur Beendigung der Reaktion. Der Farbstoff wird ausgesalzen, kurz bei pH 7,0 nachgerührt, abgesaugt und mit verdünnter NaCl-Lösung mehrmals gewaschen. Der Farbstoff wird bei 60° getrocknet. Er entspricht in Form seiner freien Säure der Formel

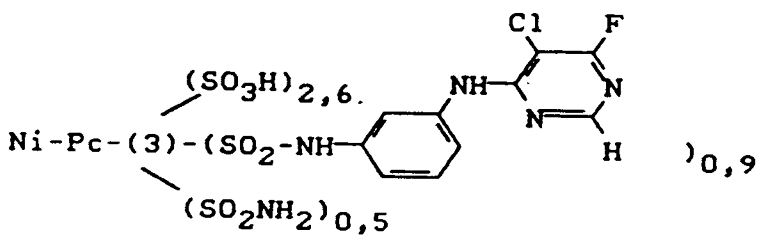

Der Farbstoff färbt Baumwolle in äußerst wasch- und lichtechten blaustichigen Grüntönen, wobei die optimale Färbetemperatur bei 80° liegt.

Zu Farbstoffen mit ähnlichen Eigenschaften gelangt man, wenn man die in Absatz 2 genannten 22 Teile 4-Fluor-5-chlor-6-(3-aminophenyl)amino-pyrimidin durch 22,8 Teile 4-Fluor-5-chlor-6-(4-aminophenyl)-methylaminopyrimidin oder durch 22 Teile 4-Fluor-5-chlor-6-(4-aminophenyl)amino-pyrimidin oder durch 22,8 Teile 4-Fluor-5-chlor-6-(3-amino-4-methylphenyl)amino-pyrimidin bzw. durch 24,6 Teile 4-Fluor-5-chlor-6-(3-chlor-4-aminophenyl)amino-pyrimidin ersetzt.

Beispiel 8

57,5 Teile Nickel-Phthalocyanin 99 %ig werden in 257 Teilen Chlorsulfonsäure 8 Stunden bei 136 bis 138° gerührt. Die Schmelze wird auf 25° gekühlt und - gegebenenfalls nach Verdünnen mit etwas Chlorsulfonsäure - auf Eis ausgetragen, wobei die Temperatur von +3° nicht überschritten werden soll. Die Suspension wird abgesaugt und mit 1600 Teilen Eiswasser, dem 150 Teile Salzsäure 30 %ig zugesetzt sind, gewaschen.

Das Nutschgut wird mit 1000 Telien Wasser angeschlagen und 15 Minuten verrührt. Nun gibt man 12,5 Teile Aminoethansulfonsäure (in Form einer wäßrigen Lösung eines Na-Salzes und anschließend 23,8 Teile 4-Fluor-5-chlor-6-(3-aminophenyl)amino-pyrimidin zu. Durch Zugabe von Natronlauge wird der pH-Wert der Suspension bzw. Lösung in 2 Stunden auf 10,0 gestellt, wobei gleichzeitig die Temperatur auf 23° erhöht wird. Man rührt bei pH 10 und 20° bis 24° bis zur Beendigung der Reaktion. Der Farbstoff wird ausgesalzen, kurz bei pH 7,0 nachgerührt, abgesaugt und mit verdünnter NaCl-Lösung mehrmals gewaschen. Der Farbstoff wird bei 60° getrocknet. Er entspricht in Form seiner freien Säure formal der Formel

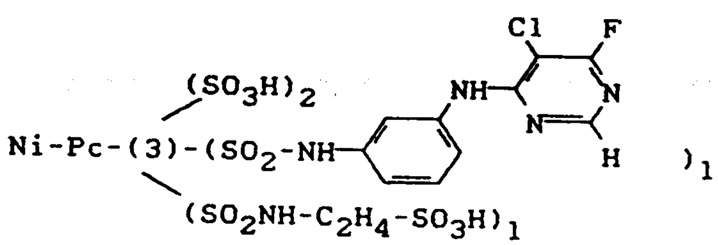

Der Farbstoff färbt Baumwolle in äußerst wasch- und lichtechten blaustichigen Grüntönen, wobei die optimale Färbetemperatur bei 80° liegt.

Farbstoffe mit ähnlichen Eigenschaften erhält man, wenn man die in Absatz 2 genannten 12,5 Teile Amino-ethansulfonsäure durch 6,5 Teile Aminoessigsäure, durch 11,1 Teile Amino-methansulfonsäure, durch 14,1 Teile bzw. 7,1 Teile Amino-ethanschwefelsäure-ester oder durch 12,3 Teile amino-ethansulfonsäure ersetzt und im übrigen wie in Absatz 2 beschrieben verfährt.

Beispiel 9

59,4 Teile Kupferphthalocyanin 97 %ig werden in 298 Teilen Chlorsulfonsäure 8 Stunden bei 136 bis 138° gerührt. Nach dem Abkühlen auf 25° wird auf Eis ausgetragen, wobei die Temperatur +3° nicht überschreiten soll. Die Suspension wird abgesaugt und mit 1600 Teilen Eiswasser, dem 70 Teile Salzsäure 30 %ig zugesetzt sind, gewaschen.

Das Nutschgut wird mit 1000 Teilen Eiswasser angeschlagen und 15 Minuten verrührt. Dann gibt man 26,3 Teile 4-Fluor-5-chlor-6-(3-aminophenyl)amino-pyrimidin und 12,2 g Aminomethansulfonsäure zu, rührt 15 Minuten nach und stellt mit verdünnter Natronlauge auf pH 6,5. Anschließend hält man 3 Stunden bei 0° bis 5° und pH 6,5, erhöht den pH auf 9,5 bis 10,0 und läßt nach 2 Stunden die Temperatur auf 20° bis 25° kommen. Nach 15 Stunden bei 20° bis 25° wird auf pH 7 gestellt, der Farbstoff mit Natriumchlorid ausgesalzen, abgesaugt und mit Natriumchlorid-Lösung gewaschen. Der nach Trocknen erhaltene Farbstoff entspricht in Form seiner freien Säure im wesentlichen der Formel

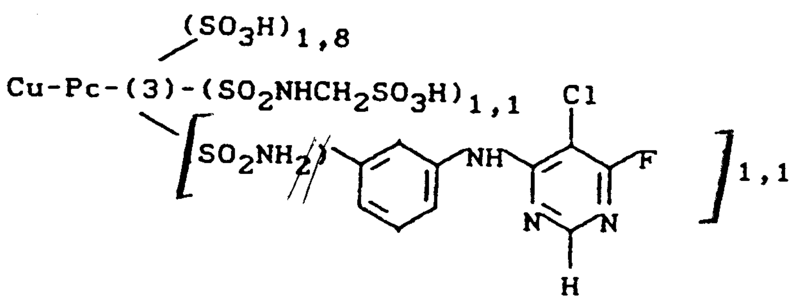

und färbt nach dem Ausziehverfahren Baumwolle in klaren, wasch- und lichtechten türkisblauen Tönen.

Beispiel 10

59,4 Teile Kupferphthalocyanin 97 %ig werden in 310 Teilen Chlorsulfonsäure 8 Stunden bei 136 bis 138°, nach Zusatz von 35 Teilen Thionylchlorid noch 4 Stunden bei 90 bis 92° gerührt. Die Schmelze wird auf Eis ausgetragen, wobei die Temperatur +3° nicht überschreiten soll. Nach Absaugen wird mit 1600 Teilen salzsaurem Eiswasser gewaschen.

Das Nutschgut wird mit 1000 Teilen Eiswasser angeschlagen. Dann rührt man 55 Teile 4-Fluor-5-chlor-6-(3-amino-4-sulfophenyl)amino-pyrimidin und 5,9 Teile Ammoniumchlorid ein. Bei 0° bis 5° wird der pH auf 6,0 bis 6,5 gestellt und 3 Stunden mit verdünnter Natronlauge gehalten. Dann stellt man auf pH 9,5 bis 10 und läßt nach 2 Stunden die Schmelze auf Raumtemperatur kommen. Nach ca. 15 Stunden bei 20 bis 25° wird auf pH 7 gestellt, der Farbstoff mit Natriumchlorid ausgesalzen, abgesaugt, mit Natriumchlorid-Lösung gewaschen und im Vakuum bei 60° getrocknet. Der Farbstoff entspricht in Form seiner freien Säure im wesentlichen der Formel

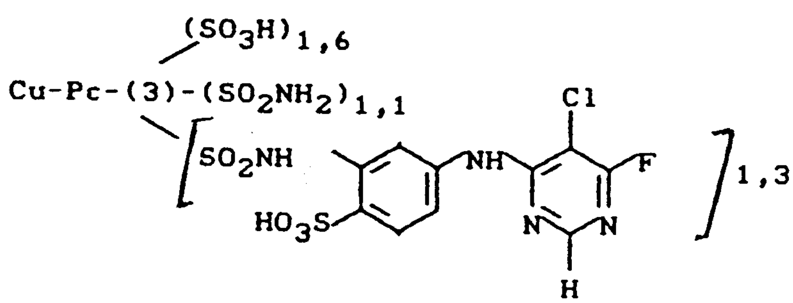

und färbt Baumwolle im Druck in klaren türkisblauen Tönen. Das 4-Fluor-5-chlor-6-(3-amino-4-sulfophenyl)-amino-pyrimidin erhält man durch Umsetzung von 1 Mol 2,4-Diaminobenzolsulfonsäure mit 1 Mol 4,6-Difluor-5-chlor-pyrimidin in wasser bei Raumtemperatur.

## Patentansprüche

1. Reaktivfarbstoffe der Formel

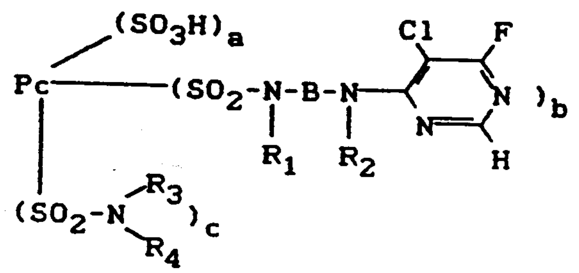

(I)

worin

| | |
|---|---|
| Pc = | Rest eines Cu- oder Ni-Phthalocyanins |
| $R_1$, $R_2$ = | H, gegebenenfalls substituiertes $C_1$-$C_4$-Alkyl oder zusammen gegebenenfalls substituiertes $C_2$-Alkylen, |
| B = | gegebenenfalls substituiertes Phenylen, |
| $R_3$, $R_4$ = | H, gegebenenfalls substituierter aliphatischer oder aromatischer Rest |
| a = | 1,0 bis 2,7, vorzugsweise 1,8 bis 2,7, |
| b = | 0,8 bis 1,2, |
| c = | 0,5 bis 1,5, vorzugsweise 0,5 bis 1,0, wobei a + b + c = 3 bis 4. |

2. Farbstoffe des Anspruchs 1 mit

| | |
|---|---|
| $R_1$ - $R_4$ = | H, |
| B = | Phenylen, gegebenenfalls substituiert durch $C_1$-$C_4$-Alkyl, $C_1$-$C_4$-Alkoxy oder Halogen, |
| a = | 1,8 bis 2,7, |
| b = | 0,8 bis 1,2, |
| c = | 0,5 bis 1,1. |

3. Farbstoffe des Anspruchs 1 mit

| | |
|---|---|
| $R_1$ - $R_4$ = | H, |
| B = | Sulfo- oder Carboxyphenylen, gegebenenfalls weiter substituiert durch $C_1$-$C_4$-Alkyl, $C_1$-$C_4$-Alkoxy, oder Cl, |
| a = | 1,8 bis 2,7, |
| b = | 0,8 bis 1,2, |
| c = | 0,5 bis 1,1. |

4. Farbstoffe des Anspruchs 1 mit

| | |
|---|---|
| $R_1$ - $R_4$ = | H, |
| B = | Phenylen, gegebenenfalls substituiert durch $C_1$-$C_4$-Alkyl, $C_1$-$C_4$-Alkoxy, oder Cl, |
| a = | 1,8 bis 2,7, |
| b = | 0,8 bis 1,0, |
| c = | 0,5 bis 1,0. |

5. Farbstoffe des Anspruchs 1 mit

| | |
|---|---|
| $R_1$ - $R_3$ = | H |
| $R_4$ = | eine wasserlöslichmachende Gruppe, vorzugsweise $SO_3H$, COOH oder OH enthaltender aliphatischer oder aromatischer Rest |
| B = | Phenylen, gegebenenfalls substituiert durch $SO_3H$, COOH, $C_1$-$C_4$-Alkyl, $C_1$-$C_4$-Alkoxy oder Halogen. |

6. Verwendung der Farbstoffe der Ansprüche 1 bis 5 zum Färben und Bedrucken von hydroxyl- und amidgruppenhaltigen Textilmaterialien.

**Claims**

1. Reactive dyestuffs of the formula

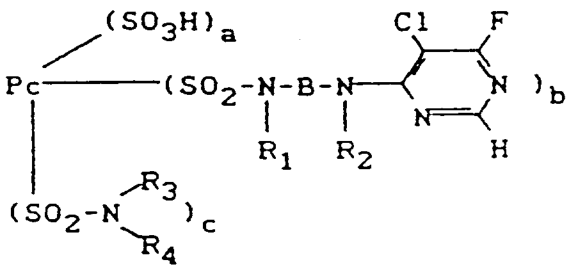

(I)

wherein

| | |
|---|---|
| Pc = | radical of a Cu- or Ni-phthalocyanine, |
| $R_1$, $R_2$ = | H, optionally substituted $C_1$-$C_4$-alkyl or together optionally substituted $C_2$-alkylene, |
| B = | optionally substituted phenylene, |
| $R_3$, $R_4$ = | H, optionally substituted aliphatic or aromatic radical, |
| a = | 1.0 to 2.7, preferably 1.8 to 2.7, |
| b = | 0.8 to 1.2, |
| c = | 0.5 to 1.5, preferably 0.5 to 1.0, where a + b + c = 3 to 4. |

2. Dyestuffs of Claim 1 where

| | |
|---|---|
| $R_1$ - $R_4$ = | H, |
| B = | phenylene, optionally substituted by $C_1$-$C_4$-alkyl, $C_1$-$C_4$-alkoxy or halogen, |
| a = | 1.8 to 2.7, |
| b = | 0.8 to 1.2, |
| c = | 0.5 to 1.1. |

3. Dyestuffs of Claim 1 where

| | |
|---|---|
| $R_1$ - $R_4$ = | H, |
| B = | sulpho- or carboxy-phenylene, optionally further substituted by $C_1$-$C_4$-alkyl, $C_1$-$C_4$-alkoxy, or Cl, |
| a = | 1.8 to 2.7, |
| b = | 0.8 to 1.2, |
| c = | 0.5 to 1.1. |

4. Dyestuffs of Claim 1 where

| | |
|---|---|
| $R_1$ - $R_4$ = | H, |
| B = | phenylene, optionally substituted by $C_1$-$C_4$-alkyl, $C_1$-$C_4$-alkoxy, or Cl, |
| a = | 1.8 to 2.7, |
| b = | 0.8 to 1.0, |
| c = | 0.5 to 1.0. |

5. Dyestuffs of Claim 1 where

| | |
|---|---|
| $R_1$ - $R_3$ = | H, |
| $R_4$ = | an aliphatic or aromatic radical which contains a water-solubilizing group (preferably $SO_3H$, COOH, OH), |
| B = | phenylene, optionally substituted by $SO_3H$, COOH, $C_1$-$C_4$-alkyl, $C_1$-$C_4$-alkoxy or halogen. |

6. Use of the dyestuffs of Claims 1 to 5 for dyeing and printing hydroxyl- and amido-containing textile materials.

## Revendications

**1.** Colorants réactifs de formule :

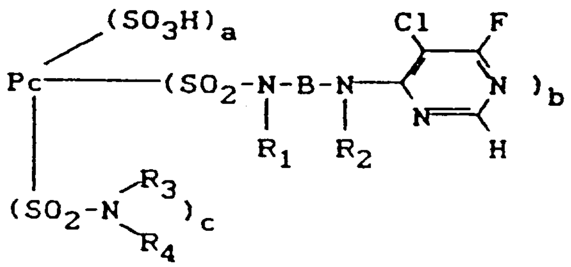

(I)

dans laquelle
Pc représente le reste d'une phtalocyanine de Cu ou de Ni,
$R_1$ et $R_2$ représentent chacun H, un groupe alkyle en $C_1$-$C_4$, éventuellement substitué, ou bien ils forment ensemble un groupe alkylène en $C_2$ éventuellement substitué,
B représente un groupe phénylène éventuellement substitué,
$R_3$ et $R_4$ représentent chacun H, un reste aliphatique ou aromatique éventuellement substitué,
a vaut 1,0 à 2,7, avantageusement 1,8 à 2,7,
b vaut 0,8 à 1,2,
c vaut 0,5 à 1,5, avantageusement 0,5 à 1,0, la somme a + b + c valant 3 à 4.

**2.** Colorants selon la revendication 1, dans lesquels les symboles $R_1$ à $R_4$ représentent chacun H,
B représente un groupe phénylène, un groupe alkyle en $C_1$-$C_4$ ou alcoxy en $C_1$-$C_4$, éventuellement substitués ou de l'halogène,
a vaut 1,8 à 2,7,
b vaut 0,8 à 1,2,
c vaut 0,5 à 1,1.

**3.** Colorants selon la revendication 1, dans lesquels les symboles $R_1$ à $R_4$ représentent chacun H,
B représente un groupe sulfo- ou carboxy-phénylène, éventuellement encore substitué par un reste alkyle en $C_1$-$C_4$, alcoxy en $C_1$-$C_4$ ou Cl;
a vaut 1,8 à 2,7,
b vaut 0,8 à 1,2,
c vaut 0,5 à 1,1.

**4.** Colorants selon la revendication 1, dans lesquels les symboles $R_1$ à $R_4$ représentent chacun H,
B représente un groupe phénylène, éventuellement substitué par un reste alkyle en $C_1$-$C_4$, alcoxy en $C_1$-$C_4$ ou par Cl,
a vaut 1,8 à 2,7,
b vaut 0,8 à 1,0,
c vaut 0,5 à 1,0.

**5.** Colorants selon la revendication 1, dans le cas desquels les symboles $R_1$ à $R_3$ valent chacun H,
$R_4$ représente un reste aliphatique ou aromatique contenant un groupe de solubilisation dans l'eau, avantageusement $SO_3H$, COOH ou OH,
B représente un reste phénylène, éventuellement substitué par $SO_3H$, COOH, un groupe alkyle en $C_1$-$C_4$, un groupe alcoxy en $C_1$-$C_4$ ou de l'halogène.

**6.** Utilisation des colorants selon les revendications 1 à 5 pour teindre et imprimer des matières textiles contenant des groupes hydroxyles et amido.